(19) Europäisches Patentamt
European Patent Office
Office européen des brevets

(11) **EP 1 934 559 B1**

(12) **FASCICULE DE BREVET EUROPEEN**

(45) Date de publication et mention de la délivrance du brevet:
**12.04.2017 Bulletin 2017/15**

(21) Numéro de dépôt: **06808193.4**

(22) Date de dépôt: **22.09.2006**

(51) Int Cl.:
*G01D 5/14* (2006.01)          *G01D 5/16* (2006.01)
*G01D 5/20* (2006.01)

(86) Numéro de dépôt international:
**PCT/FR2006/002175**

(87) Numéro de publication internationale:
**WO 2007/034089 (29.03.2007 Gazette 2007/13)**

(54) **CAPTEUR ET PROCEDE DE MESURE DE POSITION ET DE VITESSE**

SENSOR UND VERFAHREN ZUR MESSUNG VON POSITION UND GESCHWINDIGKEIT

SENSOR AND METHOD FOR MEASURING POSITION AND SPEED

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.09.2005 FR 0509784**

(43) Date de publication de la demande:
**25.06.2008 Bulletin 2008/26**

(73) Titulaire: **HUTCHINSON**
**75008 Paris (FR)**

(72) Inventeur: LENGLET, Luc, Lucien, Marie
F-92300 Levallois-Perret (FR)

(74) Mandataire: **Cabinet Plasseraud et al**
**66 rue de la Chaussée d'Antin**
**75440 Paris Cedex 09 (FR)**

(56) Documents cités:
**US-A- 4 450 443     US-A- 4 737 698**
**US-A- 4 912 660     US-A- 6 002 250**

**Description**

La présente invention concerne un capteur et un procédé de mesure de position et de vitesse.

Il existe des capteurs de position et de vitesse d'une pièce mobile comportant :

- au moins un inducteur d'excitation propre à induire un champ magnétique d'excitation en fonction d'un courant ou d'une tension d'excitation de cet inducteur,
- au moins une cible en matériau conducteur ou magnétique propre à modifier en fonction de sa position le champ magnétique d'excitation, cette cible étant solidaire de la pièce mobile,
- au moins un premier transducteur propre à transformer le champ magnétique modifié par la cible en un signal électrique de mesure, et
- un premier estimateur apte à estimer, à l'issue d'une période d'observation $T_{obs}$, la position et la vitesse de la cible à partir de N échantillons du signal électrique de mesure et de N échantillons du courant et/ou de la tension d'excitation, ces échantillons étant prélevés pendant la période d'observation $T_{obs}$ et N étant un entier supérieur à deux.

Dans les capteurs existants, le champ magnétique d'excitation est un signal alternatif de fréquence $f_0$ et l'estimateur est un démodulateur synchrone réglé sur la fréquence $f_0$ pour extraire l'amplitude de la composante de fréquence $f_0$ dans le signal électrique mesuré. Cette amplitude extraite est représentative de la position de la cible.

Les démodulateurs synchrones permettent d'éliminer les bruits additifs présents dans le signal électrique mesuré. Par bruits additifs, on désigne ici les bruits liés à différents phénomènes parasites qui s'ajoutent ou se superposent au signal électrique théorique qui devrait être obtenu en l'absence de bruit. L'élimination du bruit additif par le démodulateur synchrone est d'autant plus performante que la période d'observation est longue.

Par ailleurs, la position de la cible doit être sensiblement constante pendant toute la période d'observation. Dans le cas contraire, les déplacements de la cible pendant la période d'observation sont moyennés par le capteur sur la période d'observation, de sorte que la précision sur la mesure de la position décroît.

Dès lors, plus la vitesse de déplacement de la cible est importante, plus la période d'observation doit être choisie courte pour considérer que sur cette période d'observation, la position de la cible est constante. Toutefois, raccourcir la période d'observation nuit à l'élimination du bruit additif.

Ainsi, les capteurs existants sont peu précis pour mesurer la position d'une cible se déplaçant rapidement.

L'invention vise à remédier à cet inconvénient en proposant un capteur plus précis lorsque la cible se déplace rapidement.

L'invention a donc pour objet un capteur de position et/ou de vitesse d'une pièce mobile, tel que défini en revendication 1, dans lequel l'estimateur est apte à établir l'estimation de la position et/ou de la vitesse en fonction d'un modèle de déplacement de la cible pendant la période d'observation $T_{obs}$, ce modèle reliant la position de la cible à un instant t compris dans la période d'observation $T_{obs}$ à au moins la position et la vitesse à estimer.

Grâce à l'utilisation d'un modèle de déplacement, l'estimateur du capteur ci-dessus tient compte du fait qu'au moins la vitesse de déplacement de la cible, n'est pas nulle pendant la période d'observation pour établir l'estimation de la position et de la vitesse de la cible. Il n'est donc plus nécessaire de choisir une période d'observation suffisamment courte pour que la vitesse soit quasiment nulle sur cette période. Ainsi, le capteur ci-dessus peut utiliser une période d'observation plus longue que celle des capteurs existants, de manière à obtenir une mesure plus précise sans pour autant être gêné par le fait que la cible se déplace pendant la période d'observation.

Les modes de réalisation de ce capteur peuvent comporter une ou plusieurs des caractéristiques suivantes :

- l'estimateur est apte à utiliser une période d'observation glissante décalée temporellement d'au plus $\frac{N-1}{N} \cdot T_{obs}$ par rapport à la précédente période d'observation utilisée pour estimer la position et la vitesse de la cible ;
- le capteur comporte une unité d'excitation propre à générer le courant et/ou la tension d'excitation de manière à ce que la densité spectrale d'énergie du champ magnétique d'excitation soit étalée sur plusieurs fréquences comprises dans une bande de fréquences dont la largeur est d'au moins $2/(N.T_{obs})$, cette bande de fréquences contenant au moins 80% de l'énergie du champ magnétique d' excitation ;
- la largeur de la bande de fréquence est au plus égale à $2/T_{obs}$ ;
- l'unité d'excitation est apte à générer une séquence aléatoire ou pseudo-aléatoire de courant et/ou de tension d'éxcitation, de manière à ce que les N échantillons de courant et/ou de tension d'excitation forment une suite aléatoire ou pseudo-aléatoire de valeurs, et en ce que l'estimateur est apte à estimer la position et/ou la vitesse par projection d'un vecteur $\vec{D}$ formé de N échantillons du signal électrique de mesure sur au moins un vecteur d'une matrice pseudo-inverse dont un terme de la forme $(M^T M)^{-1}$ est précalculé pour plusieurs estimations, où M est une matrice, « exposant T » est la fonction de transposition de la matrice et « exposant -1 » est la fonction inverse ;
- au moins un second transducteur propre à transformer uniquement les modifications du champ magnétique d'excitation indépendantes du déplacement de la cible le long de la direction de mesure en un signal électrique de référence, un second estimateur propre à estimer la valeur du facteur multiplicatif à partir du signal électrique de référence, et un compensateur propre à compenser les variations d'amplitude du signal électrique de mesure causées par les variations du facteur multiplicatif en fonction de la valeur estimée de ce facteur multiplicatif ;

- le compensateur comprend un régulateur propre à modifier le champ magnétique d'excitation en fonction de l'écart entre une consigne de référence et la valeur estimée du facteur multiplicatif ;
- le premier estimateur est apte à augmenter automatiquement la longueur de la période d'observation lorsque l'estimation de la vitesse de la cible décroît ;
- la cible présente une rupture de conductivité non colinéaire avec la direction de mesure entre deux matériaux de conductivités différentes.

Ces modes de réalisation du capteur présentent en outre les avantages suivants :

- utiliser une période d'observation glissante permet d'obtenir un capteur plus rapide, capable d'estimer la position et la vitesse à des intervalles de temps inférieurs à $\dfrac{N-1}{N}.T_{obs}$ ;
- utiliser un champ magnétique d'excitation dont l'intensité spectrale d'énergie est étalée permet d'améliorer l'immunité au bruit de la mesure ;
- limiter à $\dfrac{2}{T_{obs}}$ la largeur de la bande de fréquences dans laquelle est étalé le spectre d'énergie du champ magnétique d'excitation permet d'éviter de gaspiller inutilement de l'énergie et donc de réduire la consommation du capteur ;
- utiliser une séquence aléatoire ou pseudo-aléatoire de courant et/ou de tension d'excitation permet de précalculer une partie de la matrice pseudo-inverse, ce qui par la suite accélère l'exécution des calculs pour estimer la position et la vitesse ;
- l'utilisation d'un compensateur permet d'accroître la précision de la mesure ;
- l'utilisation d'un régulateur permet de remplir les fonctions d'un compensateur et accroît la linéarité du capteur ;
- modifier la longueur de la période d'observation en fonction de l'estimation de la vitesse permet d'accroître la sensibilité du capteur pour les faibles vitesses ; et
- l'utilisation d'une cible en matériaux de conductivités différentes permet de limiter la sensibilité du capteur aux variations de température.

L' invention a également pour objet un procédé de mesure de la position et/ou de la vitesse d'une pièce mobile, tel que défini en revendication 11, à l'aide du capteur ci-dessus, ce procédé comportant, à l'issue de la période d'observation $T_{obs}$, une étape d'estimation de la position et/ou de la vitesse de la cible à partir de N échantillons du signal électrique de mesure et de N échantillons du courant et/ou de la tension d'excitation, ces échantillons étant prélevés pendant la période d'observation $T_{obs}$ et N étant un entier supérieur à deux, cette estimation de position et/ou de vitesse étant fonction d'un modèle de déplacement de la cible pendant la période d'observation $T_{obs}$ et N étant un entier supérieur à deux, cette estimation de position et/ou de vitesse étant fonction d'un modèle de déplacement de la cible pendant la période d'observation, ce modèle reliant la position de la cible à un instant t compris dans la période d'observation à au moins la position et la vitesse à estimer.

L'invention sera mieux comprise à la lecture de la description qui va suivre, donnée uniquement à titre d'exemple et faite en se référant aux dessins sur lesquels :

- la figure 1 est une illustration schématique de l'architecture d'un capteur de position et de vitesse d'une pièce mobile ;
- la figure 2 est une vue de face d'une cible, de l'inducteur et des transducteurs du capteur de la figure 1 ;
- la figure 3 est un organigramme d'un procédé de mesure de la position d'une pièce mobile à l'aide du capteur de la figure 1 ; et
- la figure 4 est une illustration schématique d'un autre mode de réalisation d'une cible pour mesurer une position et une vitesse angulaire.

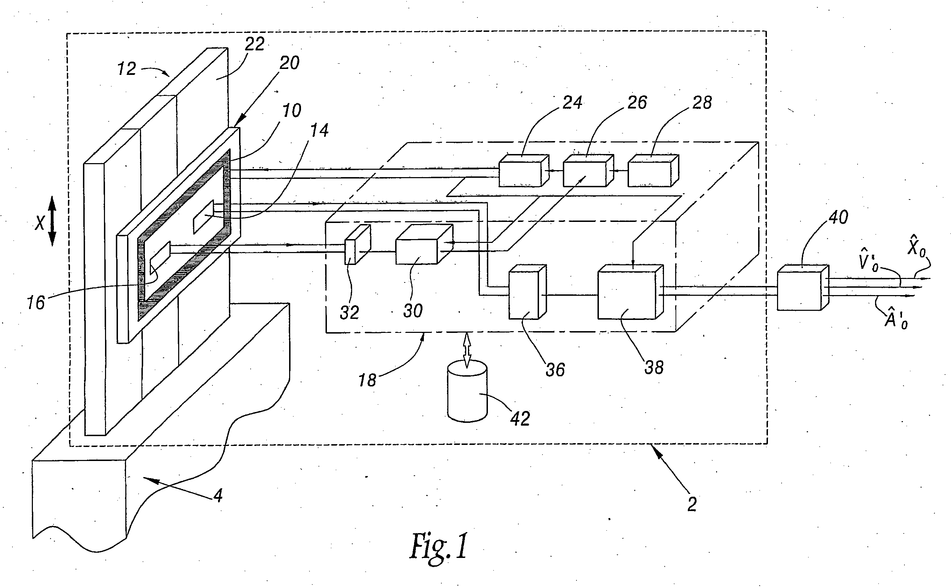

La figure 1 représente un capteur 2 de la position et de la vitesse d'une pièce mobile 4.
Ici, à titre d'illustration, la pièce 4 se déplace en translation dans une direction verticale représentée par la flèche X.
Le capteur 2 comporte :

- un inducteur 10 propre induire un champ magnétique d'excitation périodique ou alternatif ;

- une cible 12 en matériaux conducteurs propre à modifier en fonction de sa position le champ magnétique d'excitation ;
- un transducteur 14 propre à transformer le champ magnétique modifié par la cible 12 en un signal électrique de mesure ;
- un transducteur 16 de référence propre à transformer uniquement les modifications du champ magnétique d'excitation indépendantes du déplacement de la cible 12 dans la direction X en un signal électrique de référence ; et
- un circuit 18 d'excitation et de traitement des signaux, raccordé à l'inducteur 10 et aux transducteurs 14 et 16.

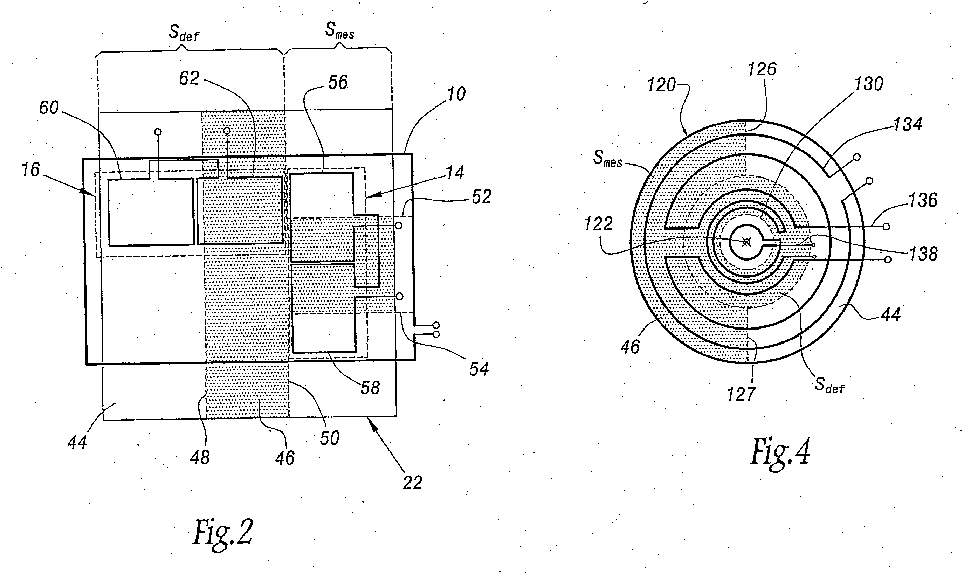

La pièce 4 et la cible 12 sont fixées l'une à l'autre, de manière à se déplacer de façon identique dans la direction X.
L'inducteur 10 et les transducteurs 14 et 16 sont fixés sur un support plan 20 disposé en vis-à-vis d'une face plane 22 de la cible 12. Le support 20 est mécaniquement indépendant de la cible 12, de manière à ce que cette cible puisse se déplacer librement en vis-à-vis du support 20 dans la direction X. De préférence, le support 20 est en matériau transparent aux champs électromagnétiques.
La cible 12, l'inducteur 10 et les transducteurs 14 et 16 seront décrits plus en détail en regard de la figure 2.
Le circuit 18 comprend :

- une unité commandable 24 d'excitation propre à générer un courant alternatif $I_{exc}$ et une tension $U_{exc}$ d'excitation de l'inducteur 10 ;
- un compensateur 26 propre à compenser les variations du signal électrique de mesure causées par des défauts non additifs en fonction d'une consigne de référence et d'une estimation de l'amplitude de ces défauts non additifs ;
- une unité 28 de réglage de la consigne de référence ;
- un estimateur 30 propre à estimer la valeur ($\hat{A}_0$) des défauts non additifs à partir du signal électrique généré par le transducteur 16 ; et
- un convertisseur analogique numérique 32 raccordé entre le transducteur 16 et des entrées de l'estimateur 30 pour transformer le signal électrique de référence en un signal numérique de référence.

Les défauts non additifs se traduisent ici par une variation de la valeur d'un facteur multiplicatif $\underline{A}$ de la position de la cible dans le signal électrique de mesure.
L'unité 24 d'excitation est propre à générer le courant $I_{exc}$ et la tension $U_{exc}$ de manière à ce que les densités spectrales d'énergie du courant $I_{exc}$ et la tension $U_{exc}$ soient étalées continûment sur une bande de fréquences [$f_{min}$ ; $f_{max}$]. Cette bande de fréquences [$f_{min}$ ; $f_{max}$] contient au moins 80%, et de préférence 90%, de l'énergie du courant $I_{exc}$ et de la tension $U_{exc}$. De cette manière, la densité spectrale d'énergie du champ magnétique d'excitation est également étalée continûment sur la même bande de fréquences, de sorte que au moins 80%, et de préférence 90%, de l'énergie du champ magnétique d'excitation soit comprise dans cette bande de fréquences [$f_{min}$ ; $f_{max}$].

La largeur de la bande de fréquences est choisie égale à $\dfrac{2}{T_{obs}}$ , où $T_{obs}$ est une période d'observation prédéfinie. La fréquence $f_{min}$ est non nulle et de préférence supérieure à 10kHz. La fréquence milieu $f_{mid}$ de la bande [$f_{min}$ ; $f_{max}$] est égale à l'inverse du temps de réponse du capteur. Ainsi, la position de la bande [$f_{min}$ ; $f_{max}$] sera choisie en fonction du temps de réponse souhaitée ou possible pour ce capteur.
La fréquence $f_{mid}$ est donnée par la relation suivants :

$$f_{mid} = \left(f_{min} + f_{max}\right)/2 \qquad\qquad (1)$$

Le compensateur 26 de défauts non additifs est, par exemple, ici un régulateur propre à commander l'unité 24 en fonction de l'écart entre la consigne de référence délivrée par l'unité 28 et d'une estimation $\hat{A}_0$ de la valeur du facteur multiplicatif $\underline{A}$ délivrée par l'estimateur 30.
A cet effet, le compensateur 26 a une entrée connectée à l'unité 28, une autre entrée connectée à une sortie de l'estimateur 30 et une sortie de commande connectée à une entrée de l'unité 24.
L'estimateur 30 a une entrée connectée à une sortie du convertisseur 32 pour recevoir le signal numérique de référence et une entrée connectée aux sorties de l'unité 24 pour recevoir la tension $U_{exc}$.
Le circuit 18 comporte également :

- un convertisseur analogique-numérique 36 raccordé au transducteur 14 pour convertir le signal électrique de mesure en un signal numérique de mesure ; et
- un estimateur 38 propre à calculer l'estimation $\hat{X}_0$ de la position et l'estimation $\hat{V}_0$ de la vitesse de la cible 12 à partir du signal numérique de mesure et de la tension $U_{exc}$.

L'estimateur 38 a donc une entrée raccordée à une sortie du convertisseur 36, une entrée raccordée aux sorties de l'unité 24, et deux sorties pour délivrer les estimations $\hat{X}_0$ et $\hat{V}_0$ vers des circuits extérieurs au capteur 2.

Ici, à titre d'illustration, les estimations $\hat{X}_0$ et $\hat{V}_0$ sont délivrées à l'entrée d'une unité 40 de traitements additionnels propre à calculer avec une plus grande précision une nouvelle estimation $\hat{V}'_0$ de la vitesse de la cible et une estimation $\hat{A}'_0$ de l'accélération de la cible. L'unité 40 délivre également en sortie l'estimation $\hat{X}_0$.

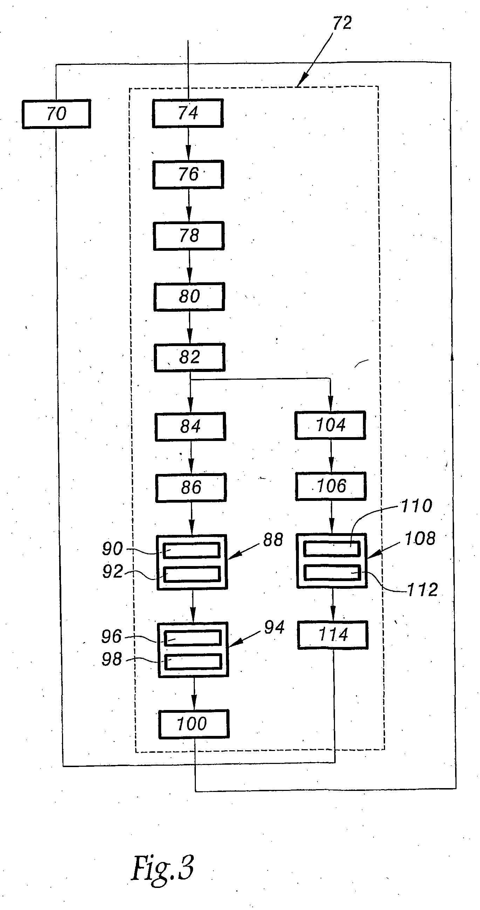

Les détails des différentes fonctions des unités du circuit 18 apparaîtront à la lecture de la description faite en regard de la figure 3.

Le circuit 18 est également associé à une mémoire 42 destinée à stocker les échantillons formant les signaux numériques de mesure et de référence ainsi que l'ensemble des données nécessaires aux calculs à exécuter par les estimateurs 30 et 38.

La figure 2 représente la face 22 de la cible 12 disposée en vis-à-vis d'une surface correspondante du support 20. La figure 2 représente également la disposition de l'inducteur 10 et des transducteurs 14 et 16 en vis-à-vis de cette face 22.

Sur la figure 2, les éléments déjà décrits en regard de la figure 1 portent les mêmes références numériques.

La face 22 est parallèle à la direction verticale X de déplacement de la cible 12 et également parallèle à la surface du support 20.

Cette face 22 est divisée en deux sections $S_{def}$ et $S_{mes}$ disposées l'une à côté de l'autre et s'étendant verticalement. Une limite verticale 50 sépare ces deux sections.

La section $S_{def}$ est réalisée à partir de la juxtaposition d'un matériau 44 de conductivité $C_1$ et d'un matériau 46 de conductivité électrique $C_2$ (représenté en grisé sur la figure 2).

Les matériaux 44 et 46 sont disposés l'un à côté de l'autre de manière à former une rupture 48 de conductivité s'étendant parallèlement à la direction X. Par exemple, les matériaux 44 et 46 forment deux bandes de largeur constante s'étendant verticalement parallèlement à la direction X.

Les matériaux 44 et 46 sont choisis de manière à ce que les conductivités $C_1$ et $C_2$ soient très différentes l'une de l'autre. De préférence, le ratio entre la conductivité $C_2$ et la conductivité $C_1$ est supérieur ou égal à 1000. Par exemple, ici, le matériau 44 est un isolant électrique dont la conductivité $C_1$ est inférieure à $10^{-10}$ S/m tandis que le matériau 46 est un conducteur électrique dont la conductivité $C_2$ est supérieure à $10^6$ S/m, tel que le cuivre.

La section $S_{mes}$ est également réalisée à partir des deux mêmes matériaux 44 et 46. Toutefois, dans la section $S_{mes}$ le matériau 46 est agencé de manière à former une bande horizontale de largeur constante s'étendant dans une direction Y perpendiculairement à la direction X et parallèlement à la surface du support 20.

La matériau 44 est disposé dans la section $S_{mes}$ de manière à former deux bandes horizontales s'étendant dans la direction Y et juxtaposées respectivement en dessus et en dessous de la bande horizontale formée à l'aide du matériaux 46.

Cet agencement des matériaux 44 et 46 dans la surface $S_{mes}$ permet de créer deux ruptures 52, 54 de conductivité non colinéaires avec la direction X. Ici, ces ruptures de conductivités 52, 54 sont parallèles à la direction Y.

L'inducteur 10 est ici formé d'une bobine à une ou plusieurs spires dont l'axe d'enroulement est perpendiculaire à la face 22. La section de l'inducteur 10 en vis-à-vis de la face 22 est suffisamment vaste pour permettre d'induire dans la cible 12 un champ magnétique d'excitation sensiblement uniforme.

Les transducteurs 14 et 16 sont disposés à l'intérieur des enroulements de l'inducteur 10.

Le transducteur 14 est disposé au moins en vis-à-vis de l'une des ruptures de conductivité horizontale 52 ou 54, de manière à être sensible aux déplacements de ces ruptures de conductivité dans la direction X.

Le transducteur 16 et au contraire disposé en vis-à-vis de la rupture 48, de manière à être insensible aux déplacements de la cible 12 dans la direction X.

Les transducteurs 14 et 16 sont formés chacun par des bobines montées de façon différentielle.

Plus précisément, le transducteur 14 est formé de deux bobines 56 et 58 raccordées en série mais enroulées en sens inverse l'une de l'autre, de sorte que si le même champ magnétique traverse les bobines 56 et 58, le signal électrique généré par le transducteur 14 est nul. Un tel transducteur permet d'obtenir une zone de fonctionnement linéaire autour du champ magnétique nul.

Ici, la bobine 56 est montée en vis-à-vis de la rupture de conductivité 52, tandis que la bobine 58 est montée en vis-à-vis de la rupture de conductivité 54, de manière à accroître la sensibilité du transducteur 14 aux déplacements de la cible 10 dans la direction X.

De façon similaire, le transducteur 16 est formé de deux bobines 60 et 62 montées de façon différentielle.

La bobine 60 est disposée de manière à être uniquement en vis-à-vis du matériau 44 et la bobine 62 est placée de manière à être en vis-à-vis de la rupture 48 et ceci quel que soient les déplacement de la cible 12 dans la direction X.

Les bornes de raccordement de l'inducteur 10 et des transducteurs 14 et 16 au circuit 18 sont représentées par de petits ronds sur la figure 2.

Les relations et les notations qui sont utilisées dans la suite de cette description vont maintenant être introduites.

La force électromotrice $e_{mes}(t)$ développée par le transducteur 14 à un instant t est donnée par la relation

suivante :

$$e_{mes}(t) = A \frac{dI_{exc}(t)}{dt} f(X) + bruit(t)$$ (2)

où :

- A est le facteur multiplicatif dont l'amplitude varie en fonction de défauts non additifs ;
- $\frac{dI_{exc}(t)}{dt}$ est la dérivée première par rapport au temps du courant $I_{exc}(t)$ ;
- f(X) est une fonction de transduction donnant l'image du flux à travers le transducteur 14 en fonction de la position X de la cible 12 ; et
- « bruit (t) » est le bruit additif qui vient se superposer au signal théoriquement obtenu en absence de bruit additif.

La valeur du facteur A dépend, par exemple, de la géométrie de la cible 12, des conductivités $C_1$ et $C_2$, et de la distance séparant le transducteur 14 de la surface de la cible 12 (« Lift Off » en anglais).

La force électromotrice $e_{def}(t)$ développée par le transducteur 16 à l'instant t est donnée par la relation suivante :

$$e_{def}(t) = A \frac{dI_{exc}(t)}{dt} + bruit(t)$$ (3)

où les différents termes de cette relation ont déjà été définis en regard de la relation (2).

On notera que la force électromotrice $e_{def}(t)$ ne dépend pas de la position X de la cible 12 étant donné que la rupture de conductivité 48 en vis-à-vis du transducteur 16 est parallèle à la direction X.

La fonction de transduction f(X) module l'amplitude du signal électrique de mesure en fonction de la position X, cette fonction f(X) peut être modélisée expérimentalement en régime statique. Par exemple, la cible 12 est amenée à une position $x_1$ et maintenue à cette position pendant que l'amplitude (c-a-d la valeur crête) de la force électromotrice $e_{mes}(t)$ est mesurée. Ensuite, la cible est déplacée jusqu'à une position $x_2$ et les opérations précédentes sont réitérées.

A titre d'illustration, dans la suite de cette description, on suppose que la fonction f(X) est définie par la relation suivante :

$$f(X) = \alpha X$$ (4)

où $\alpha$ est un coefficient constant mesuré expérimentalement.

Le déplacement de la cible 12 pendant la période d'observation $T_{obs}$ est modélisé à l'aide d'un modèle de déplacement. Ce modèle de déplacement est défini par la relation générale suivante :

$$X(t) = g\left[ X(0), \frac{\partial X}{\partial t}(0), \dots \frac{\partial^l X}{\partial t^l}(0), t \right]$$
$$t \in \left[ -T_{obs}, 0 \right]$$ (5)

où :

- X(t) est la position de la cible le long de la direction X à l'instant t appartenant à la période d'observation $[-T_{obs};0]$ ;
- g est le modèle de déplacement ;
- $X(0), \frac{\partial X}{\partial t}(0), \dots \frac{\partial^l X}{\partial t^l}(0)$ correspondent respectivement à la position, la vitesse, la dérivée seconde, .., la dérivée iième de la position à l'instant t=0, c'est-à-dire à la fin de la période d'observation. Cette position et cette ou ces dérivées sont celles à estimer.

Le modèle de déplacement de la cible pendant la période d'observation $T_{obs}$ peut, par exemple, être obtenu par développement polymoniale. Dans ce cas là, le modèle sera de la forme suivante :

$$X(t) = X(0) + \sum_{i=1}^{i=N} \frac{\partial^i X}{\partial t^i}(0) \frac{t^i}{i!}$$
$$t \in [-T_{obs}, 0]$$
(6)

Dans la suite de la description, on suppose que la cible 12 peut se déplacer à vitesse rapide pendant la période d'observation mais que l'accélération pendant cette même période d'observation est négligeable. Dans ces conditions, le modèle de déplacement retenu est le suivant :

$$X(t) = X(0) + V(0)t$$
(7)

où X(0) et V(0) sont respectivement la position et la vitesse de la cible à l'instant t=0.

On remarquera que ce modèle de déplacement traduit les connaissances qu'a le concepteur du capteur 2 sur les déplacements de la cible 12 pendant la période $T_{obs}$.

On note $f_{ech}$ la fréquence d'échantillonnage des convertisseurs analogiques numériques 32 et 36. Cette fréquence $f_{ech}$ est supérieure à $\frac{5}{T_{obs}}$ et de préférence supérieure à $\frac{100}{T_{obs}}$ ou à $\frac{1000}{T_{obs}}$ . Le nombre N d'échantillons prélevés pendant la période $T_{obs}$ est donc supérieur à 5 et de préférence supérieur à 100 ou 1000. N doit au minimum être supérieur à 2.

On note $t_i$ les instants d'échantillonnage, $t_0$ correspondant à l'instant courant (t=0), c'est-à-dire à la fin de la période d'observation $T_{obs}$, tandis que $t_{N-1}$ correspond au début de la période d'observation, c'est-à-dire à l'instant -$T_{obs}$.

$\vec{D}$ est un vecteur des N échantillons successifs du signal électrique de mesure. $\vec{D}$ est défini par la relation suivante :

$$\vec{D} = \begin{pmatrix} D_{N-1} \\ D_{N-2} \\ \vdots \\ D_1 \\ D_0 \end{pmatrix}$$
(8)

où $D_i$ représente la valeur du signal électrique de mesure échantillonné à l'instant $t_i$.

$\vec{E}$ est un vecteur des N échantillons successifs de la dérivée temporelle du courant $I_{exc}$. Ce vecteur est défini par la relation suivante :

$$\vec{E} = \begin{pmatrix} E_{N-1} \\ E_{N-2} \\ \vdots \\ E_1 \\ E_0 \end{pmatrix}$$
(9)

où $E_i$ est l'échantillon de la dérivée temporelle du courant $I_{exc}$ à l'instant d'échantillonnage $t_i$.

$\vec{B}$ est un vecteur des N échantillons successifs de bruit défini par la relation suivante :

$$\vec{B} = \begin{pmatrix} B_{N-1} \\ B_{N-2} \\ \vdots \\ B_1 \\ B_0 \end{pmatrix} \tag{10}$$

où $B_i$ représente l'amplitude du bruit additif à l'instant d'échantillonnage $t_i$. Contrairement aux vecteurs $\vec{D}$ et $\vec{E}$, ce vecteur $\vec{B}$ est aléatoire.

En utilisant les relations (2), (4) et (7), la relation matricielle suivante reliant les vecteurs $\vec{D}$ et $\vec{B}$ peut être écrite :

$$\vec{D} = M \cdot \vec{P} + \vec{B} = \begin{pmatrix} \alpha A E_{N-1} & -T_{obs} \cdot \alpha A E_{N-1} \\ \alpha A E_{N-2} & -\dfrac{(N-2)T_{obs}}{N-1} \cdot \alpha A E_{N-2} \\ \vdots & \vdots \\ \alpha A E_1 & \dfrac{-T_{obs}}{N-1} \cdot \alpha A E_1 \\ \alpha A E_0 & 0 \end{pmatrix} \begin{pmatrix} X(0) \\ V(0) \end{pmatrix} + \vec{B} \tag{11}$$

où $\vec{P}$ est défini par la relation suivante :

$$\vec{P} = \begin{bmatrix} X(0) \\ V(0) \end{bmatrix} \tag{12}$$

La matrice M est définie dans la relation (11).

Il est possible de déterminer les estimations $\hat{X}_0$ et $\hat{V}_0$ respectivement de la position et de la vitesse de la cible 12 au sens des moindres carrés en utilisant la méthode dite de la « pseudo inverse ». Cette méthode est par exemple décrite dans la référence bibliographique suivante :

R.M. Pringle, A. A. Rayner, "Generalized Inverse Matrices", London, Griffin, 1971.

Les estimations $\hat{X}_0$ et $\hat{V}_0$ sont obtenues à l'aide de la relation suivante :

$$\hat{P} = \left( M^T M \right)^{-1} M^T D = QD \tag{13}$$

où :

- $\hat{P}$ est le vecteur estimation,
- Q est la matrice pseudo-inverse ;
- $^T$ désigne la fonction transposition,
- $^{-1}$ désigne la fonction inverse d'une matrice.

Le vecteur -estimation $\hat{P}$ est défini par la relation suivante :

$$\hat{P} = \begin{bmatrix} \hat{X}_0 \\ \hat{V}_0 \end{bmatrix} \qquad\qquad (14)$$

La matrice pseudo-inverse Q est définie par la relation suivante :

$$Q = \left(M^T M\right)^{-1} M^T = \left[\vec{Q}_1 ; \vec{Q}_2\right] \qquad\qquad (15)$$

où $\vec{Q}_1$ et $\vec{Q}_2$ sont des vecteurs orthogonaux correspondant respectivement à la première et à la seconde colonne de la matrice Q.

On définit également un modèle h(t) pour l'évolution au cours du temps de la valeur du facteur multiplicatif A à l'aide de la relation suivante :

$$A = h(t) \qquad\qquad (16)$$

On supposera ici que les variations de la valeur du facteur multiplicatif $\underline{A}$ présentent une accélération négligeable. Ceci est représenté par le modèle suivant :

$$h(t) = A(0) + VA(0)t \qquad\qquad (17)$$

où :

- $A(0)$ est la valeur du facteur multiplicatif à l'instant d'échantillonnage $t_0$, et
- $VA(0)$ est la vitesse d'évolution de l'amplitude du facteur multiplicatif à l'instant d'échantillonnage $t_0$.

$\vec{D}_d$ est un vecteur des N échantillons successifs du signal électrique de référence défini par la relation suivante :

$$\vec{D}_d = \begin{bmatrix} D_{dN-1} \\ D_{dN-2} \\ \vdots \\ D_{d2} \\ D_{d1} \\ D_{d0} \end{bmatrix} \qquad\qquad (18)$$

où $D_{di}$ représente la valeur du signal électrique de référence à l'instant $t_i$.

$\vec{B}_d$ est un vecteur d'échantillons de bruit additif présents dans le signal électrique de référence est défini par la relation suivante :

$$\vec{B_d} = \begin{bmatrix} B_{dN-2} \\ B_{dN-1} \\ \vdots \\ B_{d2} \\ B_{d1} \\ B_{d0} \end{bmatrix} \tag{19}$$

où $B_{di}$ est l'amplitude du bruit additif à l'instant d'échantillonnage $t_i$. Contrairement au vecteur $\vec{D_d}$, le vecteur $\vec{B_d}$ est aléatoire.

De façon similaire à ce qui a été décrit en regard de la relation (11) il est possible à l'aide des relations (3) et (17) d'établir la relation matricielle suivante :

$$\vec{D_d} = M_d \cdot \vec{P_d} + \vec{B_d} = \begin{bmatrix} E_{N-1} & -T_{obs}E_{N-1} \\ E_{N-2} & -\dfrac{(N-2)T_{obs}}{N-1}E_{N-2} \\ \vdots & \vdots \\ E_1 & -\dfrac{T_{obs}}{N-1}E_1 \\ E_0 & 0 \end{bmatrix} \begin{bmatrix} A(0) \\ VA(0) \end{bmatrix} + \vec{B_d} \tag{20}$$

où $P_d$ est défini par la relation suivante :

$$P_d = \begin{bmatrix} A(0) \\ VA(0) \end{bmatrix} \tag{21}$$

Comme précédemment, il est possible de déterminer les estimations $\hat{A}_0$ et $\hat{VA}_0$ respectivement de la valeur et de la vitesse de variation du facteur multiplicatif $\underline{A}$ minimisant l'écart entre le modèle représenté par la relation (20) et les échantillons du signal électrique de référence en utilisant la méthode de la pseudo-inverse.

Selon cette méthode, ces estimations sont données par la relation suivante :

$$\hat{P}_d = \left(M_d^T M_d\right)^{-1} M_d^T D = QD \tag{22}$$

où :

- la matrice $M_d$ est définie dans la relation (20), et
- la matrice $Q_d$ est la matrice pseudo-inverse.

Le vecteur $\hat{P}_d$ est défini par la relation suivante :

$$\hat{P}_d = \begin{bmatrix} \hat{A}_0 \\ \hat{VA}_0 \end{bmatrix} \tag{23}$$

La matrice pseudo inverse $Q_d$ est définie par la relation suivante :

$$Q_d = \left(M_d^T M_d\right)^{-1} M_d = \left[\vec{Q}_{d1}; \vec{Q}_{d2}\right] \qquad (24)$$

où :

- $\vec{Q}_{d1}$ et $\vec{Q}_{d2}$ correspondent aux vecteurs définis respectivement par les première et seconde colonnes de la matrice $Q_d$.

Les différents paramètres des relations précédentes connus à l'avance sont enregistrés dans la mémoire 42. Par exemple, la mémoire 42 contient la valeur des paramètres suivants : $\alpha$, N, $T_{obs}$ et $\underline{A}$. A est connu puisque celui-ci est égal à la consigne de référence de l'unité 28.

La mémoire 42 contient également des matrices K et $K_d$ définies par les relations suivantes :

$$K = \left(M^T M\right)^{-1} \qquad (25)$$

$$K_d = \left(M_d^T M_d\right)^{-1} \qquad (26)$$

Les matrices K et $K_d$ sont indépendantes des valeurs du vecteur $\vec{E}$ lorsque celui-ci est formé d'échantillons formant une suite aléatoire ou pseudo-aléatoire.

La valeur de la période $T_{obs}$ choisie est typiquement comprise entre 1s et 100$\mu$s, et, de préférence, elle est comprise entre 0,3ms et 500$\mu$s pour une cible se déplaçant à une vitesse supérieure à 1 m/s et de préférence à une vitesse supérieure à 100 m/s. Ici, la valeur de la période $T_{obs}$ est fonction de l'estimation $\hat{V}_0$. Plus précisément, si l'estimation $\hat{V}_0$ croît, la période $T_{obs}$ est automatiquement raccourcie et lorsque l'estimation $\hat{V}_0$ décroît, la période $T_{obs}$ est automatiquement rallongée. Cette tâche est, par exemple, réalisée par l'estimateur 38.

Le fonctionnement du capteur 2 va maintenant être décrit à l'aide de la figure 3.

En permanence, lors d'une étape 70, le compensateur 26 compare la consigne de référence délivrée par l'unité 28 à l'estimation $\hat{A}_0$ délivrée par l'estimateur 30. En fonction de l'écart entre cette consigne et cette estimation, le compensateur 26 commande l'unité d'excitation 24, de manière à maintenir l'amplitude du facteur multiplicatif $\underline{A}$ égale à la consigne de référence.

A chaque instant d'échantillonnage courant $t_0$, le circuit 18 procède à une phase 72 de traitement des signaux électriques délivrés par les transducteurs 14 et 16.

Au début de la phase 72, lors d'une étape 74, les transducteurs 14 et 16 transforment le champ magnétique d'excitation modifié par la cible 12 en une force électromotrice $e_{mes}(t)$ et $e_{def}(t)$, respectivement. Lors de l'étape 74, ces forces électromotrices sont échantillonnées à l'instant $t_i$ par les convertisseurs 32 et 36, de manière à obtenir les valeurs $e_{mes}(t_0)$ et $e_{def}(t_0)$.

Lors d'une étape 76, ces échantillons $e_{mes}(t_0)$ et $e_{def}(t_0)$ sont enregistrés dans la mémoire 42 en tant que valeur $D_0$ et $D_{d0}$.

Lors d'une étape 78, l'estimateur 38 construit alors à partir des échantillons enregistrés dans la mémoire le vecteur $\vec{D}$ et l'estimateur 30 construit le vecteur $\vec{D}_d$.

Lors d'une étape 80, le circuit 18 relève la valeur $E_0$. Pour ce faire, le circuit 18 relève la valeur de la tension $U_{exc}$ à l'instant $t_0$ et la mémorise en tant que valeur de $E_0$. En effet, la tension $U_{exc}$ est proportionnelle à la dérivée du courant $I_{exc}$ par rapport au temps et à la valeur de l'inductance de l'inducteur 10.

Ensuite, lors d'une étape 82, l'estimateur 38 construit le vecteur $\vec{E}$ et l'enregistre dans la mémoire 42.

Lors d'une étape 84, l'estimateur 38 calcule la nouvelle matrice M à partir du vecteur $\vec{E}$, de la valeur du coefficient $\alpha$, de la valeur A, et de la période d'observation $T_{obs}$ enregistrée dans la mémoire 42.

Ensuite, lors d'une étape 86, l'estimateur 38 calcule la matrice pseudo=inverse Q à partir de la relation (15). Plus précisément, lors de cette étape 86, l'estimateur 38 multiplie la matrice K préenregistrée dans la mémoire 42 par la matrice $M^T$. Ainsi, à l'issue de l'étape 86, les vecteurs $\vec{Q}_1$ et $\vec{Q}_2$ sont connus.

A partir de la matrice Q, lors d'une étape 88, l'estimateur 38 estime la position et la vitesse de la cible. Plus précisément, lors d'une opération 90, l'estimateur 38 projette le vecteur $\vec{D}$ sur le vecteur $\vec{Q}_1$ pour obtenir l'estimation

$\hat{X}_0$ . Lors d'une opération .92, l'estimateur 38 projette également le vecteur $\vec{D}$ sur le vecteur $\vec{Q}_2$ pour obtenir l'estimation $\hat{V}_0$.

Les estimations $\hat{X}_0$ et $\hat{V}_0$ sont délivrées par le capteur 2 à l'unité 40 de traitement additionnel.

Lors d'une étape 94, l'unité 40 peaufine les estimations délivrées par le capteur 2. Plus précisément, lors d'une opération 96, l'unité 40 vérifie si l'estimation $\hat{V}_0$ n'est pas inférieure à un seuil prédéterminé $S_1$. Dans l'affirmative, l'unité 40 calcule une estimation $\hat{V}'_0$ plus précise de la vitesse de la cible à partir des estimations $\hat{X}_0$, $\hat{X}_1$, ..., $\hat{X}_m$ où l'indice m est un nombre entier strictement supérieur à N. $\hat{X}_i$ représente la valeur de l'estimation de la position de la cible délivrée par le capteur 2 à l'instant d'échantillonnage $t_i$.

Dans le cas contraire, c'est-à-dire si l'estimation $\hat{V}_0$ est supérieure au seuil $S_1$, celle-ci n'est pas modifiée, de sorte que $\hat{V}'_0$ est égal à $\hat{V}_0$. L'opération 96 permet d'améliorer la précision de l'estimation de vitesse si la valeur estimée de cette vitesse par le capteur 2 est faible. Par exemple, le seuil $S_1$ est égal à 0.01 m/s.

Lors d'une opération 98, l'unité 40 calcule également une estimation $\hat{A}'_0$ de l'accélération de la cible 12 à partir des <u>m</u> estimations précédentes $\hat{X}_i$ de la position et/ou de la vitesse $\hat{V}_i$.

Ensuite, lors d'une étape 100, l'unité 40 délivre les estimations $\hat{X}_0$, $\hat{V}'_0$ et $\hat{A}'_0$.

En parallèle aux étapes 84 à 100, l'estimateur 30 estime la valeur du facteur multiplicatif A à l'instant $t_0$.

Plus précisément, lors d'une étape 104, l'estimateur 30 calcule la matrice $M_d$ à partir du vecteur $\vec{E}$ mémorisé. Ensuite, lors d'une étape 106, l'estimateur 30 calcule la matrice pseudo-inverse $Q_d$ comme défini dans la relation (24). A cet effet, lors de l'étape 106, l'estimateur 30 multiplie la matrice mémorisée $K_d$ par la transposée de la matrice $M_d$.

Ensuite, lors d'une étape 108, l'estimateur 30 estime la valeur $\hat{A}_0$ et la vitesse $\hat{VA}_0$, de variation du facteur multiplicatif A. Plus précisément, lors d'une opération 110, l'estimateur 30 projette le vecteur $\vec{D}_d$ sur le vecteur $\vec{Q}_{d1}$ pour obtenir l'estimation $\hat{A}_0$. De même, lors d'une opération 112, l'estimateur 30 projette le vecteur $\hat{D}_d$ sur le vecteur $\hat{Q}_{d2}$ pour obtenir l'estimation $\hat{VA}_0$.

Ensuite, lors d'une étape 114, l'estimateur 30 envoie estimation, $\hat{A}_0$ au compensateur 26 qui utilise cette estimation lors de l'étape 70 pour maintenir constante la valeur du facteur <u>A</u>.

La phase 72 est réitérée à chaque instant d'échantillonnage, de sorte qu'une nouvelle estimation de la position, de la vitesse et de l'accélération de la cible 12 est construite à chaque nouvel instant d'échantillonnage.

La figure 4 représente une cible 120 adaptée pour estimer la position et la vitesse angulaire d'une pièce en rotation autour d'un axe 122.

La cible 120 a ici la forme d'un disque divisé en zones formées à partir de matériaux de différentes conductivités et agencées l'un par rapport à l'autre de manière à former deux sections $S_{mes}$ et $S_{def}$.

$S_{mes}$ est ici un anneau dont la moitié gauche est formée par exemple, par le matériau 46 tandis que la moitié droite est formée à l'aide du matériau 44. La juxtaposition de ces deux matériaux 44 et 46 créent deux ruptures de conductivité 126 et 127 qui s'étendent radialement.

La surface $S_{def}$ est placée au centre de la surface $S_{mes}$. Cette surface $S_{def}$ est formée par une pastille centrale circulaire réalisée à partir du matériau 44. Cette pastille centrale est entourée par un anneau complet réalisé à l'aide du matériau 46. Une telle configuration de la surface $S_{def}$ crée une rupture 130 de conductivité circulaire et centrée autour de l'axe 122.

La figure 4 représente également un inducteur 134 propre à créer un champ magnétique d'excitation sensiblement uniforme et deux transducteurs différentiels 136 et 138.

Le transducteur 136 comporte, comme cela a été décrit en regard de la figure 2, deux bobines montées en série et enroulées en sens inverse l'une de l'autre, de manière à ce que lorsque ces deux bobines sont traversées par le même champ magnétique, le signal électrique aux bornes du transducteur 136 est nul.

Le transducteur 136 est disposé en regard de la surface $S_{mes}$, de manière à délivrer un signal électrique de mesure en fonction du déplacement en rotation des ruptures de conductivité 126 et 127.

Comme le transducteur 136, le transducteur 138 est formé de deux bobines raccordées en série et enroulées en sens inverse. Toutefois, le transducteur 136 est placé en vis-à-vis de la surface $S_{def}$, de manière à délivrer un signal électrique de référence indépendant de la position angulaire du disque 120.

L'inducteur 134 joue le rôle de l'inducteur 10 de la figure 1 et les tranducteurs 136 et 138 jouent respectivement le rôle des inducteurs 14 et 16 de la figure 1. Le fonctionnement d'un capteur de position et de vitesse angulaire utilisant la cible 120 ne sera donc pas décrit ici plus en détail.

De nombreux autres modes de réalisation sont possibles.

Par exemple, il n'est pas nécessaire que les transducteurs 14 et 16 ou 136 et 138 soient formés de deux bobines montées de façon différentielle.

Le matériau $C_1$ décrit comme isolant peut, par exemple, être de l'air, ce qui simplifie la fabrication de la cible 12 ou 120.

Si les perturbations non additives jouent un rôle peu important sur la précision de la mesure, le capteur 2 peut être simplifié en supprimant le transducteur 16 ainsi que le convertisseur 32, l'estimateur 30; le compensateur 26 et l'unité de réglage 28.

La compensation des défauts non additifs a été décrite ici comme étant réalisée à l'aide d'un compensateur 26 permettant de maintenir constante la valeur du facteur multiplicatif $\underline{A}$. En variante, une telle compensation peut également être réalisée en divisant la force électromotrice $e_{mes}(t)$ par l'amplitude de la force électromotrice $e_{def}(t)$ .

Dans ce dernier cas, un diviseur de tension est introduit entre d'une part, le convertisseur 36 et l'estimateur 30 et d'autre part, l'estimateur 38. Ce diviseur de tension effectue la division de la force électromotrice $e_{mes}(t)$ par l'amplitude de la force électromotrice $e_{def}(t)$ obtenue en sortie de l'estimateur 30. Le compensateur 26 et l'unité de réglage peuvent alors être supprimés.

Il est également possible de compenser les défauts non additifs en multipliant simplement la force électromotrice $e_{mes}(t)$ par un développement limité de l' amplitude de l'inverse de $e_{def}(t)$. Un tel développement limité peut prendre la forme suivante :

$$(1 - \epsilon)/A$$

La fonction de transduction f(X) a été décrite comme étant uniquement proportionnelle à X. Toutefois, d'autres formes de relations sont possibles. Par exemple, la fonction de transduction peut avoir la forme suivante :

$$f(X) = \alpha X + \beta$$

où $\alpha$ et $\beta$ sont des coefficients connus.

Ici les coefficients de la fonction f(X) ont été décrits comme constants. Toutefois, dans le cas où ces coefficients ne seraient pas constants, il est possible de prévoir une unité d'ajustement de la valeur de ces coefficients en fonction, par exemple, de l'estimation $\hat{X}_0$.

L'inducteur et le transducteur 14 ont été décrits comme étant formés à l'aide de bobinage distincts. En variante, le même bobinage est utilisé à la fois en tant qu'inducteur propre à créer le champ magnétique d'excitation et en tant que transducteur pour mesurer le champ magnétique d'excitation modifié par la cible.

Ici, les ruptures de conductivité électriques ont été décrites comme étant formées en juxtaposant des matériaux de conductivités électriques différentes. En variante, ces ruptures de conductivités électriques peuvent être obtenues en formant des nervures ou des rayures sur la surface d'un seul matériau conducteur. Egalement en variante, ces ruptures de conductivité peuvent, si cela est souhaitable, être enfouies à l'intérieur du matériau conducteur.

Si l'accélération de la cible n'est pas négligeable pendant la période $T_{obs}$, il est possible de rajouter un terme au modèle de déplacement décrit ici représentant l'accélération de la cible pendant la période d'observation. D'autres termes représentant des dérivés de la position d'ordre supérieur par rapport au temps peuvent également être ajoutés au modèle de déplacement si leur contribution n'est pas négligeable pour l'estimation de la position de la cible. Dans ces derniers cas, l'estimateur délivrera alors une estimation pour la position et la vitesse de la cible ainsi qu'une estimation pour ces dérivés de la position d'ordre supérieur.

Ici, le modèle de déplacement a été décrit comme étant obtenu à l'aide d'une décomposition polynomiale. Toutefois, si le déplacement de la cible comporte des modes vibratoires, un modèle de déplacement peut être obtenu à l'aide de séries de Fourier.

Ici, étant donné que l'axe d'enroulement du transducteur 16 est perpendiculaire à la face 22 de la cible, ce transducteur 16 est sensible uniquement au défaut non additif dans cette direction perpendiculaire à la face 22. En variante, un ou plusieurs autres transducteurs additionnels ayant des axes d'enroulement non colinéaires avec celui du transducteur 16 sont prévus de manière à mesurer l'amplitude de défaut non additif dans des directions non colinéaires.

De même, il peut être prévu plusieurs inducteurs d'excitation.

Il est également possible d'utiliser plusieurs transducteurs tels que le transducteur 14, par exemple, pour améliorer la résolution angulaire.

Les sections $S_{mes}$ et $S_{def}$ ont été décrites comme étant adjacentes l'une à l'autre. En variante, ces surfaces sont non-adjacentes et, par exemple, portées par des cibles espacées spatialement l'une de l'autre.

Il n'est pas nécessaire que l'inducteur d'excitation soit disposé sur le même support que celui utilisé pour supporter les transducteurs 14 et 16. Par exemple, l'inducteur d'excitation peut être placé de l'autre côté dé la cible par rapport au côté où se trouvent les transducteurs 14 et 16.

Il est également possible de commander l'unité 24 de manière à ne pas étaler le spectre du champ magnétique d'excitation. Par exemple, dans ce cas là, le courant d'excitation $I_{exc}$ est une sinusoïde pure à une fréquence $f_0$. Dans cette situation, l'estimateur 30 est remplacé par un démolutateur synchrone apte à filtrer le signal électrique reçu de manière à en extraire l'amplitude de la composante de fréquence $f_0$.

Si le vecteur $\vec{E}$ se répète à intervalle régulier $T_e$ alors, il est possible d'estimer la position uniquement tous les intervalles Te. De cette manière, puisqu'à la fin de l'intervalle $T_e$, le vecteur $\vec{E}$ est identique à celui au début de cet intervalle, il n'est pas nécessaire de recalculer la matrice pseudo-inverse ce qui permet d'accélérer les calculs.

La cible 12 a été décrite ici comme étant fixée sur la pièce mobile. En variante, la cible 12 est venue de matière avec la pièce mobile et ne forme qu'un seul bloc avec cette pièce.

L'étalement de spectre du champ magnétique d'excitation a été décrit comme étant continu. En variante, il peut être discret.

Il est également possible de calculer les valeurs $E_i$ au lieu de les relever à la sortie de l'unité d'excitation 24. Il est possible de calculer les valeurs $E_i$ lorsque l'évolution au cours du temps du champ magnétique d'excitation est connue à l'avance. Cela peut, par exemple, être le cas lorsque le champ magnétique d'excitation est périodique.

En variante, la cible peut être réalisée en matériau magnétique.

Le capteur décrit ci-dessus peut être adapté pour délivrer uniquement une estimation de la position de la cible ou uniquement une estimation de la vitesse de la cible. Dans cette variante, le vecteur $\vec{D}$ est alors uniquement projeté soit sur le vecteur $\vec{Q}_1$ soit sur le vecteur $\vec{Q}_2$ selon l'estimation que l'on cherche à obtenir.

**Revendications**

1. Capteur de position et/ou de vitesse d'une pièce mobile, ce capteur comportant :

   - au moins un inducteur (10) d'excitation propre à induire un champ magnétique d'excitation en fonction d'un courant ou d'une tension d'excitation de cet inducteur,
   - au moins une cible (12) en matériau conducteur ou magnétique propre à modifier en fonction de sa position le champ magnétique d'excitation, cette cible étant solidaire de la pièce mobile,
   - au moins un premier transducteur (14) propre à transformer le champ magnétique modifié par la cible en un signal électrique de mesure, et
   - un premier estimateur (38) destiné à estimer, à l'issue d'une période d'observation $T_{obs}$, au moins la position de la cible à partir du signal électrique de mesure et du courant et/ou de la tension d'excitation, **caractérisé en ce que** l'estimateur est adapté pour établir au moins l'estimation de la position de la cible en fonction :
   - d'un modèle de déplacement de la cible pendant la période d'observation $T_{obs}$, ce modèle reliant la position X de la cible à un instant t compris dans la période d'observation $T_{obs}$ à au moins la position et la vitesse de la cible en fin de période d'observation et étant défini par la relation suivante :

$$X(t) = g\left[X(0), \frac{\partial x}{\partial t}(0), \dots \frac{\partial^i x}{\partial t^i}(0), t\right] \tag{5}$$

   où :

   - X(t) est la position de la cible à l'instant t appartenant à la période d'observation $[-T_{obs};0]$ ;
   - g est le modèle de déplacement ;

   - $X(0), \dfrac{\partial X}{\partial t}(0), \dots \dfrac{\partial^i X}{\partial t^i}(0)$ correspondent respectivement à la position, la vitesse, la dérivée seconde, ..., la dérivée iième de la position à l'instant t=0, c'est-à-dire à la fin de la période d'observation,
   - et de N échantillons du signal électrique de mesure et de N échantillons du courant et/ou de la tension d'excitation, ces échantillons étant prélevés pendant la période d'observation $T_{obs}$ et N étant un entier supérieur à deux.

2. Capteur selon la revendication 1, **caractérisé en ce que** le modèle de déplacement est obtenu par développement polynomial et présente la forme suivante :

$$X(t) = X(0) + \sum_{i=1}^{i=m} \frac{\partial^i X}{\partial t^i}(0) \frac{t^i}{i!}$$

3. Capteur selon la revendication 1 ou 2, **caractérisé en ce que** l'estimateur (38) est apte à utiliser une période d'observation glissante décalée temporellement d'au plus $\frac{N-1}{N} \cdot \mathbf{T_{obs}}$ par rapport à la précédente période d'observation utilisée pour estimer la position et la vitesse de la cible.

4. Capteur selon l'une quelconque des revendications précédentes, **caractérisé en ce que** le capteur comporte une unité (24) d'excitation propre à générer le courant et/ou la tension d'excitation de manière à ce que la densité spectrale d'énergie du champ magnétique d'excitation soit étalée sur plusieurs fréquences comprises dans une bande de fréquences dont la largeur est d'au moins $2/(N.T_{obs})$, cette bande de fréquences contenant au moins 80% de l'énergie du champ magnétique d'excitation.

5. Capteur selon la revendication 4, **caractérisé en ce que** la largeur de la bande de fréquence est au plus égale à $2/T_{obs}$.

6. Capteur selon la revendication 4 ou 5, **caractérisé en ce que** l'unité (24) d'excitation est apte à générer une séquence aléatoire ou pseudo-aléatoire de courant et/ou de tension d'excitation, de manière à ce que les N échantillons de courant et/ou de tension d'excitation forment une suite aléatoire ou pseudo-aléatoire de valeurs, et **en ce que** l'estimateur est apte à estimer la position et/ou la vitesse par projection d'un vecteur $\vec{\mathbf{D}}$ formé de N échantillons du signal électrique de mesure sur au moins un vecteur d'une matrice pseudo-inverse dont un terme de la forme $(M^T M)^{-1}$ est précalculé pour plusieurs estimations, où M est une matrice, « exposant T » est la fonction de transposition de la matrice et « exposant -1 » est la fonction inverse.

7. Capteur selon l'une quelconque des revendications précédentes, dans lequel l'amplitude du signal électrique de mesure dépend d'un facteur multiplicatif de la position dont la valeur est susceptible de varier en fonction de défauts non additifs, **caractérisé en ce que** ce capteur comporte :

   - au moins un second transducteur (16) propre à transformer uniquement les modifications du champ magnétique d'excitation indépendantes du déplacement de la cible le long de la direction de mesure (X) en un signal électrique de référence,
   - un second estimateur (30) propre à estimer la valeur du facteur multiplicatif à partir du signal électrique de référence, et
   - un compensateur (26) propre à compenser les variations d'amplitude du signal électrique de mesure causées par les variations du facteur multiplicatif en fonction de la valeur estimée de ce facteur multiplicatif.

8. Capteur selon la revendication 7, **caractérisé en ce que** le compensateur (26) comprend un régulateur propre à modifier le champ magnétique d'excitation en fonction de l'écart entre une consigne de référence et la valeur estimée du facteur multiplicatif.

9. Capteur selon l'une quelconque des revendications précédentes, **caractérisé en ce que** le premier estimateur (30) est apte à augmenter automatiquement la longueur de la période d'observation lorsque l'estimation de la vitesse de la cible décroît.

10. Capteur selon l'une quelconque des revendications précédentes, **caractérisé en ce que** la cible (12) présente une rupture de conductivité non colinéaire avec la direction de mesure entre deux matériaux de conductivités différentes.

11. Procédé de mesure de la position et/ou de la vitesse d'une pièce mobile à l'aide d'un capteur selon l'une quelconque des revendications précédentes, **caractérisé en ce que** le procédé comporte, à l'issue de la période d'observation $T_{obs}$, une étape (88) d'estimation de la position et/ou de la vitesse de la cible à partir de N échantillons du signal électrique de mesure et de N échantillons du courant et/ou de la tension d'excitation, ces échantillons étant prélevés pendant la période d'observation $T_{obs}$ et N étant un entier supérieur à deux, cette estimation de position et/ou de vitesse étant fonction d'un modèle de déplacement de la cible pendant la période d'observation, ce modèle reliant la position de la cible à un instant t compris dans la période d'observation à au moins la position et la vitesse à estimer et étant de

$$\text{la forme } X(t) = g\left[X(0), \frac{\partial X}{\partial t}(0), \ldots \frac{\partial^{i} X}{\partial t^{i}}(0), t\right].$$

**Patentansprüche**

1. Sensor für die Position und/oder Geschwindigkeit eines beweglichen Teils, wobei dieser Sensor umfasst:

   - wenigstens einen Erregerinduktor (10), der dafür eingerichtet ist, ein Erregermagnetfeld in Abhängigkeit von einem Erregerstrom oder einer Erregerspannung dieses Induktors zu induzieren,
   - wenigstens ein Target (12) aus leitendem oder magnetischem Material, das dafür eingerichtet ist, in Abhängigkeit von seiner Position das Erregermagnetfeld zu verändern, wobei dieses Target mit dem beweglichen Teil fest verbunden ist,
   - wenigstens einen ersten Transduktor (14), der dafür eingerichtet ist, das durch das Target veränderte Magnetfeld in ein elektrisches Messsignal umzuwandeln, und
   - eine erste Schätzeinrichtung (38), die dazu bestimmt ist, am Ende eines Beobachtungszeitraums $T_{obs}$ wenigstens die Position des Targets ausgehend von dem elektrischen Messsignal und dem Erregerstrom und/oder der Erregerspannung zu schätzen,

   **dadurch gekennzeichnet, dass** die Schätzeinrichtung ausgebildet ist, wenigstens die Schätzung der Position des Targets in Abhängigkeit von Folgendem zu erstellen:

   - von einem Modell der Verlagerung des Targets während des Beobachtungszeitraums $T_{obs}$, wobei dieses Modell die Position X des Targets zu einem Zeitpunkt t, der in dem Beobachtungszeitraum $T_{obs}$ liegt, mit wenigstens der Position und der Geschwindigkeit des Targets am Ende des Beobachtungszeitraums verknüpft und durch die folgende Beziehung definiert ist:

   $$X(t) = g\left[X(0), \frac{\partial X}{\partial t}(0), \ldots \frac{\partial^{i} X}{\partial t^{i}}(0), t\right] \qquad (5)$$

   wobei:

   - X(t) die Position des Targets zum Zeitpunkt t ist, der im Beobachtungszeitraum $[-T_{obs};0]$ liegt;
   - g das Modell der Verlagerung ist;
   - $X(0)$, $\frac{\partial X}{\partial t}(0), \ldots \frac{\partial^{i} X}{\partial t^{i}}(0)$ der Position, der Geschwindigkeit, der zweiten Ableitung, ..., bzw. der i-ten Ableitung der Position zum Zeitpunkt t=0, das heißt am Ende des Beobachtungszeitraums, entsprechen,
   - und von N Abtastwerten des elektrischen Messsignals und von N Abtastwerten des Erregerstroms und/oder der Erregerspannung, wobei diese Abtastwerte während des Beobachtungszeitraums $T_{obs}$ gewonnen werden und wobei N eine ganze Zahl ist, die größer als zwei ist.

2. Sensor nach Anspruch 1, **dadurch gekennzeichnet, dass** das Modell der Verlagerung durch Polynomialentwicklung erhalten wird und die folgende Form aufweist:

   $$X(t) = X(0) + \sum_{i=1}^{i=m} \frac{\partial^{i} X}{\partial t^{i}}(0)\frac{t^{i}}{i!}.$$

3. Sensor nach Anspruch 1 oder 2, **dadurch gekennzeichnet, dass** die Schätzeinrichtung (38) geeignet ist, einen gleitenden Beobachtungszeitraum zu verwenden, der zeitlich um höchstens $\frac{N-1}{N} \cdot \mathrm{T_{obs}}$ bezüglich des vorhergehenden Beobachtungszeitraums verschoben ist, der verwendet wird, um die Position und die Geschwindigkeit des Targets zu schätzen.

4. Sensor nach einem der vorhergehenden Ansprüche, **dadurch gekennzeichnet, dass** der Sensor eine Erregereinheit (24) umfasst, die dafür eingerichtet ist, den Erregerstrom und/oder die Erregerspannung derart zu erzeugen, dass die spektrale Energiedichte des Erregermagnetfeldes über mehrere Frequenzen gespreizt ist, die in einem Frequenzband enthalten sind, dessen Breite wenigstens $2/(N.T_{obs})$ beträgt, wobei dieses Frequenzband wenigstens 80 % der Energie des Erregermagnetfeldes enthält.

5. Sensor nach Anspruch 4, **dadurch gekennzeichnet, dass** die Breite des Frequenzbandes höchstens gleich $2/T_{obs}$ ist.

6. Sensor nach Anspruch 4 oder 5, **dadurch gekennzeichnet, dass** die Erregereinheit (24) geeignet ist, eine Zufalls- oder Pseudozufallssequenz von Erregerstrom und/oder Erregerspannung zu erzeugen, derart, dass die N Abtastwerte des Erregerstroms und/oder der Erregerspannung eine Zufalls- oder Pseudozufallsfolge von Werten bilden, und dadurch, dass die Schätzeinrichtung geeignet ist, die Position und/oder die Geschwindigkeit durch Projektion eines Vektors $\vec{D}$, der von N Abtastwerten des elektrischen Messsignals gebildet wird, auf wenigstens einen Vektor einer pseudoinversen Matrix geschätzt wird, von der ein Ausdruck der Form $(M^{T}M)^{-1}$ für mehrere Schätzungen im Voraus berechnet wird, wobei M eine Matrix ist, "Exponent T" die Funktion der Transposition der Matrix ist und "Exponent -1" die inverse Funktion ist.

7. Sensor nach einem der vorhergehenden Ansprüche, wobei die Amplitude des elektrischen Messsignals von einem Multiplikationsfaktor der Position abhängt, dessen Wert in Abhängigkeit von nicht additiven Fehlern variieren kann, **dadurch gekennzeichnet, dass** dieser Sensor umfasst:

- wenigstens einen zweiten Transduktor (16), der dafür eingerichtet ist, ausschließlich die Änderungen des Erregermagnetfeldes, die von der Verlagerung des Targets entlang der Messrichtung (X) unabhängig sind, in ein elektrisches Referenzsignal zu transformieren,
- eine zweite Schätzeinrichtung (30), die dafür eingerichtet ist, den Wert des Multiplikationsfaktors ausgehend von dem elektrischen Referenzsignal zu schätzen, und
- einen Kompensator (26), der dafür eingerichtet ist, die Änderungen der Amplitude des elektrischen Messsignals, die durch die Änderungen des Multiplikationsfaktors verursacht werden, in Abhängigkeit von dem geschätzten Wert dieses Multiplikationsfaktors zu kompensieren.

8. Sensor nach Anspruch 7, **dadurch gekennzeichnet, dass** der Kompensator (26) einen Regler umfasst, der dafür eingerichtet ist, das Erregermagnetfeld in Abhängigkeit von der Abweichung zwischen einem Referenzsollwert und dem geschätzten Wert des Multiplikationsfaktors zu verändern.

9. Sensor nach einem der vorhergehenden Ansprüche, **dadurch gekennzeichnet, dass** die erste Schätzeinrichtung (30) geeignet ist, die Länge des Beobachtungszeitraums automatisch zu vergrößern, wenn die Schätzung der Geschwindigkeit des Targets kleiner wird.

10. Sensor nach einem der vorhergehenden Ansprüche, **dadurch gekennzeichnet, dass** das Target (12) einen nicht mit der Messrichtung kollinearen Leitfähigkeitssprung zwischen zwei Materialien mit unterschiedlichen Leitfähigkeiten aufweist.

11. Verfahren zur Messung der Position und/oder der Geschwindigkeit eines beweglichen Teils mithilfe eines Sensors nach einem der vorhergehenden Ansprüche, **dadurch gekennzeichnet, dass** das Verfahren am Ende des Beobachtungszeitraums $T_{obs}$ einen Schritt (88) der Schätzung der Position und/oder der Geschwindigkeit des Targets ausgehend von N Abtastwerten des elektrischen Messsignals und von N Abtastwerten des Erregerstroms und/oder der Erregerspannung umfasst, wobei diese Abtastwerte während des Beobachtungszeitraums $T_{obs}$ gewonnen werden und wobei N eine ganze Zahl ist, die größer als zwei ist, wobei diese Schätzung von Position und/oder Geschwindigkeit von einem Modell der Verlagerung des Targets während des Beobachtungszeitraums abhängig ist, wobei dieses Modell die Position des Targets zu einem Zeitpunkt t, der in dem Beobachtungszeitraum liegt, mit wenigstens der Position und der Geschwindigkeit verknüpft, die zu schätzen sind, und die Form

$$X(t) = g\left[X(0), \frac{\partial X}{\partial t}(0), \dots \frac{\partial^i X}{\partial t^i}(0), \ t\right]$$

hat.

**Claims**

1. A sensor of position and/or speed of a movable, this sensor comprising:

   - at least one excitation inductor (10) suitable for inducing a magnetic excitation field as a function of an excitation current or voltage of this inductor,
   - at least one target (12) made of conducting or magnetic material suitable for modifying as a function of its position the magnetic excitation field, this target being secured to the movable part,
   - at least one first transducer (14) suitable for transforming the magnetic field modified by the target into an electrical measurement signal, and
   - a first estimator (38) intended to estimate, on completion of an observation period $T_{obs}$, at least the position of the target on the basis of the electrical measurement signal and of the excitation current and/or voltage,

   **characterized in that** the estimator is adapted to establish at least the estimate of the position as a function of a model of displacement of the target during the observation period $T_{obs}$, this model linking the position X of the target at an instant t included in the observation period $T_{obs}$ to at least the position and the speed of the target at the end of the observation period, and being defined by the following relation:

   $$X(t) = g\left[X(0), \frac{\partial X}{\partial t}(0), \dots \frac{\partial^i X}{\partial t^i}(0), \ t\right] \tag{5}$$

   where :

   - X(t) is the position of the target at the instant t belonging to the observation period $[-T_{obs};0]$ ;
   - g is the displacement model ;
   - $X(0), \frac{\partial X}{\partial t}(0), \dots \frac{\partial^i X}{\partial t^i}(0)$ correspond respectively to the position, the speed, the second derivative, ...,
     the $i^{th}$ derivative of the position at the instant t=0, that is to say at the end of the observation period,
   - and of N samples of the electrical measurement signal and of N samples of excitation current and/or voltage, these samples being taken during the observation period $T_{obs}$ and N being an integer greater than two.

2. The sensor as claimed in claim 1, **characterized in that** the displacement model is obtained by polynomial expansion and presents the following form:

   $$X(t) = X(0) + \sum_{i=1}^{i=m} \frac{\partial^i X}{\partial t^i}(0) \frac{t^i}{i!}$$

3. The sensor as claimed in claim 1 or claim 2, **characterized in that** the estimator (38) is able to use a sliding observation period shifted temporally by at most $\frac{N-1}{N} \cdot T_{obs}$ with respect to the previous observation period used to estimate the position and the speed of the target.

4. The sensor as claimed in any one of preceding claims, **characterized in that** the sensor comprises an excitation unit (24) suitable for generating the excitation current and/or voltage in such a way that the spectral energy density of the magnetic excitation field is spread over several frequencies included in a frequency band whose width is at least $2/(N.T_{obs})$, this frequency band containing at least 80% of the energy of the magnetic excitation field.

5. The sensor as claimed in claim 4, **characterized in that** the width of the frequency band is at most equal to $2/T_{obs}$.

6. The sensor as claimed in claim 4 or claim 5, **characterized in that** the excitation unit (24) is able to generate a random or pseudo-random sequence of excitation current and/or voltage, in such a way that the N samples of excitation current and/or voltage form a random or pseudo-random series of values, and **in that** the estimator is able to estimate the position and/or the speed by projecting a vector $\vec{D}$ formed of N samples of the electrical measurement signal onto at least one vector of a pseudo-inverse matrix of which a term of the form $(M^{T}M)^{-1}$ is pre-calculated for several estimates, where M is a matrix, "exponent T" is the matrix transposition function and "exponent -1" is the inverse function.

7. The sensor as claimed in any one of the preceding claims, in which the amplitude of the electrical measurement signal depends on a multiplicative factor of the position whose value is capable of varying as a function of non-additive defects, **characterized in that** this sensor comprises:

   - at least one second transducer (16) suitable for transforming solely the modifications of the magnetic excitation field that are independent of the displacement of the target along the measurement direction (X) into an electrical reference signal,
   - a second estimator (30) suitable for estimating the value of the multiplicative factor on the basis of the electrical reference signal, and
   - a compensator (26) suitable for compensating for the amplitude variations in the electrical measurement signal that are caused by the variations in the multiplicative factor as a function of the estimated value of this multiplicative factor.

8. The sensor as claimed in claim 7, **characterized in that** the compensator (26) comprises a regulator suitable for modifying the magnetic excitation field as a function of the deviation between a reference setpoint and the estimated value of the multiplicative factor.

9. The sensor as claimed in any one of the preceding claims, **characterized in that** the first estimator (30) is able to automatically increase the length of the observation period when the estimate of the speed of the target decreases.

10. The sensor as claimed in any one of the preceding claims, **characterized in that** the target (12) exhibits a break in conductivity that is not collinear with the measurement direction between two materials of different conductivities.

11. A method for measuring the position and/or speed of a movable part with the aid of a sensor as claimed in any one of preceding claims, **characterized in that** the method comprises, on completion of the observation period $T_{obs}$, a step (88) of estimating the position and/or the speed of the target on the basis of N samples of the electrical measurement signal and of N samples of the excitation current and/or voltage, these samples being taken during the observation period $T_{obs}$ and N being an integer greater than two, this position and/or speed estimate being dependent on a model of displacement of the target during the observation period, this model linking the position of the target at an instant t included in the observation period to at least the position and the speed to be estimated and being in the form:

$$x(t) = g\left[ x(0), \frac{\partial x}{\partial t}(0), \ldots \frac{\partial^{i} x}{\partial t^{i}}(0), t \right].$$

Fig.1

*Fig.4*

*Fig.2*

Fig.3